Europäisches Patentamt

**European Patent Office**

**Office européen des brevets**

(11) Numéro de publication: **0 186 554**

**B1**

(12) **FASCICULE DE BREVET EUROPÉEN**

(45) Date de publication du fascicule du brevet:
**10.08.88**

(21) Numéro de dépôt: **85402337.1**

(22) Date de dépôt: **28.11.85**

(51) Int. Cl.⁴: **G 21 C 17/06,** G 01 N 29/00

(54) Procédé et dispositif de détection d'éléments combustibles non étanches dans un assemblage.

(30) Priorité: **29.11.84 FR 8418223**

(43) Date de publication de la demande:
**02.07.86 Bulletin 86/27**

(45) Mention de la délivrance du brevet:
**10.08.88 Bulletin 88/32**

(84) Etats contractants désignés:
**BE CH DE GB IT LI NL SE**

(56) Documents cité:
**EP-A-0 051 016**
**EP-A-0 115 231**
**DE-A-2 945 586**
**FR-A-2 385 185**

(73) Titulaire: **FRAMATOME, Tour Fiat 1 place de la Coupole, F-92400 Courbevoie (FR)**

(72) Inventeur: **Beuneche, Daniel, 40, rue Blaise Pascal, F-69660 Collonges Au Mont D'Or (FR)**
Inventeur: **Mauvieux, Christian, 1, Quai Gillet, F-69004 Lyon (FR)**
Inventeur: **Amiet, Pierre, Rue de Montlys Ampuis, F-69420 Condrieu (FR)**

(74) Mandataire: **Fort, Jacques, CABINET PLASSERAUD 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne la détection des éléments de combustible présentant un défaut d'étanchéité dans un assemblage combustible pour réacteur nucléaire du type comprenant un faisceau d'éléments combustibles ou "crayons" maintenus dans une structure rigide comportant des pièces terminales reliées par des tirants et des grilles réparties le long des tirants. Chaque élément est constitué par une gaine tubulaire métallique fermée par des bouchons étanches, contenant un empilement de pastilles de combustible nucléaire baignant dans une atmosphère de gaz sec sous pression, lorsque la gaine est étanche. Les pastilles sont maintenues en contact par un ressort comprimé entre l'empilement et un bouchon terminal et placé dans une chambre d'expansion occupée par le gaz sous pression.

Il est nécessaire de contrôler l'état des assemblages combustibles extraits du coeur du réacteur. Un procédé classiquement utilisé est celui du ressuage, qui consiste à mesurer l'activité relâchée par un assemblage alors qu'il est plongé dans une masse de fluide. Mais ce procédé permet seulement de vérifier que tous les éléments d'un assemblage sont bien étanches. Il ne permet pas de déterminer celui ou ceux des éléments d'un assemblage défectueux qui présentent des défauts d'étanchéité.

Il existe déjà de nombreux procédés de contrôle non destructif des éléments de combustible par ultrasons. On connaît notamment (EP-A-0 115 231) un procédé du type suivant lequel on envoie dans la gaine, à partir d'une partie terminale de celle-ci, un train d'ondes ultrasonores à une fréquence choisie pour que la propagation s'effectue en ondes de Lamb et on détecte et analyse les échos. Ce sondage est effectué à des fréquences situées dans une plage dont une fraction correspond a une absorption notable par l'eau éventuellement contenue dans la gaine et, une autre, à une réflexion sur l'extrémité du ressort, notamment en cas de pressurisation.

Cette solution est tout à fait satisfaisante lorsque les ondes sont émises et reçues par un transducteur placé sur la face terminale du bouchon qui ferme l'élément de combustible. Mais jusqu'à présent il n'était possible de vérifier tous les crayons par un tel processus qu'à condition d'avoir préalablement enlevé l'une des pièces d'extrémité de l'assemblage. En effet la présence des tirants, de diamètre nettement supérieur à celui des éléments de combustible, et les différences de niveau des bouchons dans un assemblage qui a séjourné dans un réacteur ont fait que jusqu'à présent ce procédé était mis en oeuvre après enlèvement d'une pièce terminale. Or, le remplacement d'une pièce terminale représente, sur beaucoup d'assemblages, une opération délicate.

Pour écarter la nécessité d'un démontage, on a également proposé (FR-A-2 341 183) des dispositifs permettant d'introduire un transducteur dans le faisceau, transversalement à l'axe de ce dernier, et de l'appliquer contre la paroi latérale de la gaine de l'un quelconque des éléments de combustible. Une avance du transducteur permet de contrôler tous les éléments d'une même nappe. Le temps de contrôle peut être encore diminué en prévoyant plusieurs transducteurs, portés par une pièce en forme de peigne. Mais l'utilisation de transducteurs plaqués contre la paroi latérale de la gaine donne des résultats moins favorables que celle de capteurs appliqués contre le bouchon et laisse subsister le problème du masquage de certains éléments par des tirants; de plus, cette utilisation s'affranchit de la position de l'eau dans le crayon.

L'invention vise à fournir un procédé et un dispositif de détection d'éléments de combustible non étanches dans un assemblage irradié répondant mieux que ceux antérieurement connus aux exigences de la pratique, notamment en ce qu'ils permettent une détection en ondes de Lamb à l'aide d'un transducteur placé en bout de chaque élément et présentant un bon contact avec ce dernier.

Dans ce but, l'invention propose notamment un procédé du type ci-dessus défini, caractérisé en ce qu'on introduit, dans l'intervalle compris entre l'une des pièces terminales d'un assemblage irradié et les éléments de combustible, un transducteur à l'aide d'une tige déplaçable transversalement aux éléments, jusqu'à ce que le transducteur soit au-dessus du bouchon d'un crayon on déplace la tige dans le sens longitudinal de l'assemblage pour plaquer le transducteur sur la face terminale du bouchon de l'élément à contrôler avant d'envoyer un train d'ondes ultrasonores et de détecter les échos on relève le transducteur vers la pièce d'extrémité à l'aide de la tige; on déplace la tige pour répéter les opérations en vue de vérifier de nouveaux éléments.

La tige est avantageusement introduite suivant une direction diagonale du réseau des crayons, lorsque ce réseau est carré, ce qui est le cas le plus général; c'est en effet dans cette orientation que la présence des tirants est la moins gênante. Pour accéder à la totalité des crayons, en dépit de la présence des tirants, le contrôle peut être effectué en deux ou quatre étapes, l'assemblage étant tourné de 90° autour de son axe longitudinal à l'issue de chaque étape.

L'invention propose également un dispositif permettant de mettre en oeuvre le procédé ci-dessus défini. Ce dispositif de détection par ultrasons des éléments de combustible non étanches dans un assemblage combustible pour réacteur nucléaire comprenant un faisceau d'éléments combustibles maintenus dans une structure rigide comportant des pièces terminales reliées par des tirants, comprenant un transducteur ultrasonore porté par une tige de dimensions telles qu'elle puisse s'insérer dans l'assemblage entre une pièce terminale et les bouchons des éléments des moyens de manoeuvre à mouvements croisés permettant d'amener le transducteur au-dessus des différents éléments est caractérisé en ce qu'il comprend des moyens de déplacement de la tige dans le sens longitudinal des éléments et en ce que le transducteur est monté sur la tige avec au moins un degré de liberté autour d'un axe transversal aux éléments de façon à pouvoir s'appliquer à plat sur la face terminale d'un bouchon.

L'invention sera mieux comprise à la lecture de la description qui suit d'un mode de réalisation particulier, donné à titre d'exemple non limitatif. La description se réfère aux dessins qui l'accompagnent, dans lesquels:

- la Figure 1 est un schéma de principe d'un dispositif suivant l'invention, les directions de déplacement X, Y et Z étant figurées;
- les Figures 2 et 3 montrent un ensemble appartenant au dispositif et permettant de déplacer le détecteur suivant la direction Z, respectivement en coupe suivant les plans II-II de la Figure 1 et III-III de la Figure 2;
- la Figure 4 est un schéma à grande échelle, en élévation, montrant un mode d'articulation possible du transducteur sur l'ensemble à mouvement en Z.

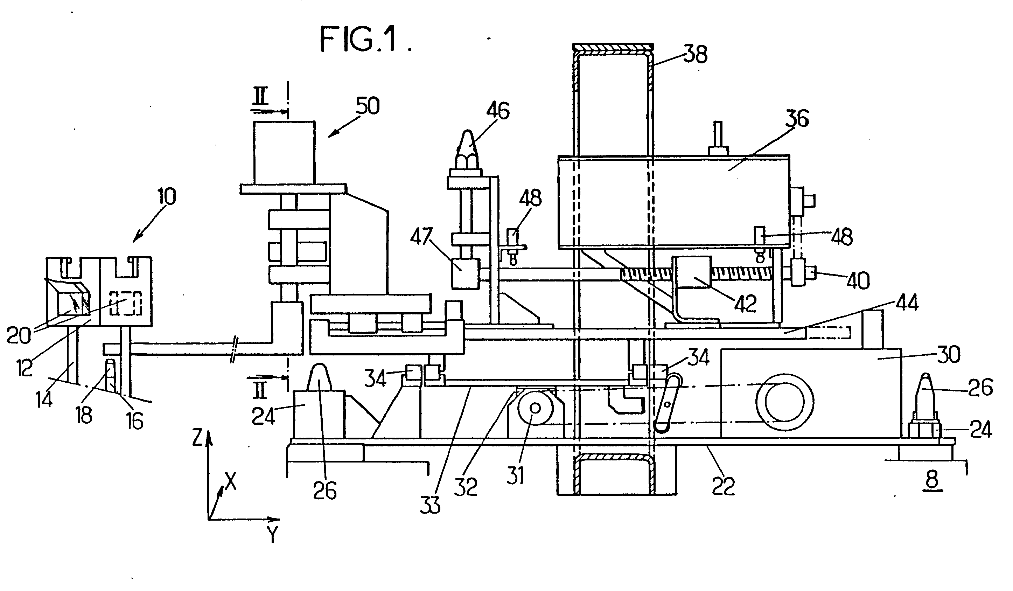

Le dispositif montré schématiquement en Figure 1 est destiné à être placé sur une structure 8 prévue dans une piscine à proximité d'un assemblage 10 à contrôler. La Figure 1 montre la silhouette de la partie haute d'un tel assemblage 10, comportant une pièce d'extrémité 12 à laquelle sont fixés des tirants 14. Un seul crayon 16, fermé par un bouchon 18, a été représenté. La platine 8 comporte des mâchoires 20 de serrage de la pièce d'extrémité 10 et un mécanisme permettant de faire tourner l'assemblage dans les mâchoires ouvertes, autour de son axe vertical.

Une autre méthode peut consister en une suspension simple à un dispositif de levage muni d'un crochet tournant associé aux mêmes mâchoires 20.

Le dispositif de détection proprement dit comporte une ossature 22 en plusieurs pièces soudées, munie de manchons 24 de centrage sur des pions 26 de la structure support 8 et un portique de manutention 38.

On décrira maintenant successivement les ensembles du dispositif qui permettent respectivement de déplacer le transducteur suivant les directions X, Y et Z.

Les deux premiers ensembles peuvent avoir n'importe laquelle des constitutions habituelles utilisables pour réaliser des mouvements croisés. Dans le mode de réalisation illustré, l'ensemble de mouvement en X comprend un moteur 30 dont l'arbre de sortie entraîne une vis 31 qui porte une bague 32 à recirculation de billes liée à un plateau-support 33. Ce plateau est muni de patins coulissant sur des glissières 34 de guidage suivant la direction X, dont on verra qu'elle est transversale au sens d'introduction du transducteur dans l'assemblage.

L'ensemble de déplacement suivant la direction Y comporte un moteur 36, de type pas-à-pas comme le moteur 30, et dont l'arbre de sortie entraîne une vis 40. Une douille à bille 42 montée sur la vis 40 entraîne une table 44 qui coulisse sur des glissières non représentées. Pour permettre de retirer manuellement le transducteur en cas de défaut de fonctionnement du moteur 36, une commande manuelle est prévue. Elle comporte un carré de manoeuvre 46 entraînant la vis 40 par un renvoi d'angle 47. Des contacteurs électriques de limitation de course 48 seront généralement prévus pour être actionnés par la douille 42 lorsque celle-ci arrive à la fin de sa course utile. L'ensemble de déplacement en X comporte généralement lui aussi des contacteurs de fin de course. Enfin, les moteurs des deux ensembles sont associés à des codeurs de mesure de déplacement (non représentés).

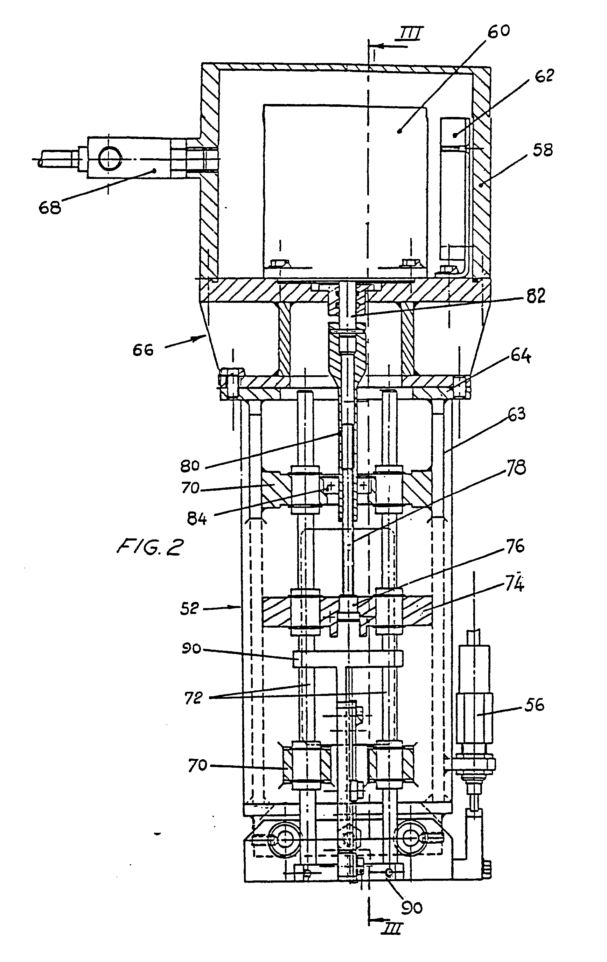

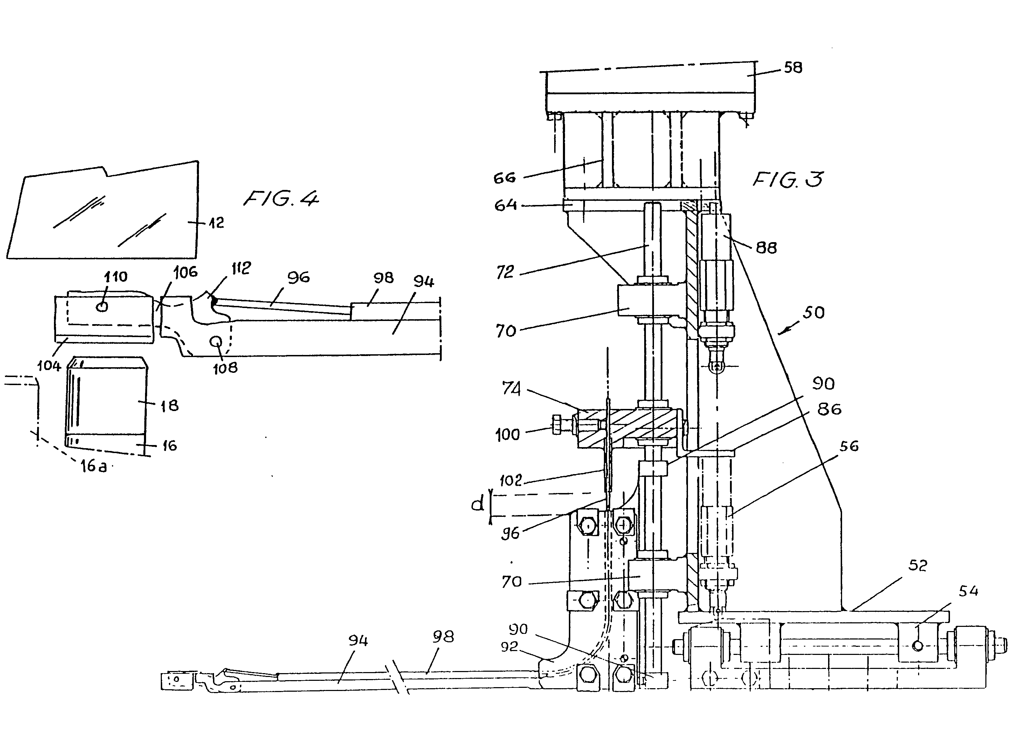

L'ensemble 50 de déplacement suivant la direction Z (c'est-à-dire suivant l'axe de l'assemblage 10) n'est montré que par son contour sur la Figure 1. Tel qu'il est représenté sur les Figures 2 et 3, cet ensemble comporte un bâti 52 porté par la table 44 par l'intermédiaire d'un dispositif élastique 54 capable de coulisser dans le sens d'introduction du transducteur dans l'assemblage et d'amortir les chocs provoqués par la venue en butée du transducteur, de façon à éviter la détérioration du matériel ou des éléments à contrôler. Un capteur de fin de course 56 détecte le coulissement et arrête le moteur 36 en cas de venue en butée provoquant un coulissement.

Le bâti 52 de l'ensemble 50 est constitué par une structure soudée comportant un coulisseau porté par la table 44, des cornières 63 et une bride 64. Sur la bride 64 est fixée, par exemple à l'aide de vis, une seconde structure 66 en plaques croisées soudées entre elles, formant le fond d'un boîtier étanche 58 qui contient, d'une part, un moteur pas-à-pas d'entraînement 60, d'autre part, des connexions électriques 62 de fourniture des impulsions de commande au moteur 60. Le fluide de pressurisation arrive à ce boîtier par l'intermédiaire d'un raccord étanche 68 (Figure 2).

Le bâti 52 (Figure 3) comporte des plaques transversales 70 de guidage d'un équipage mobile suivant la direction Z. Cet équipage comprend deux colonnes 72 reliées par une pièce de liaison 74 et coulissant dans des bagues à billes portées par les plaques 70. La plaque 74 est suspendue à l'embout 76 d'une tige filetée 78 immobilisée en rotation et engagée dans un tube taraudé 80 claveté sur l'arbre de sortie 82 du moteur 60. Un palier 84 porté par la plaque 70 supérieure assure le guidage du tube rotatif 80.

La pièce de liaison 74 porte avantageusement un index 86 (Figure 3) destiné à déclencher un contacteur 88 porté par le bâti 52 lorsque l'équipage mobile arrive en fin de course haute.

Un ensemble, qu'on appellera par la suite "sabre" du fait de sa forme, comporte une plaque verticale 92 fixée aux colonnes 72 par deux colliers 90 et une tige métallique 94 à section rectangulaire bloquée sur la plaque 92 de façon à être dirigé suivant la direction Y. Dans la plaque est ménagée une gorge de guidage d'un câble 96, prolongée par une gaine 98 fixée sur la tige 94. La gorge est recouverte d'une plaque empêchant le câble de s'échapper. L'extrémité du câble 96 est fixée par une vis 100 sur la pièce de liaison 74 et elle n'est maintenue que sur une fraction de sa longueur par un guide 102. Ainsi, le câble 96 reste libre sur une longueur d.

La partie terminale de la tige 94 (Figure 4) porte un transducteur 104 par l'intermédiaire d'une double articulation permettant au transducteur de débattre verticalement par rapport à la tige et garantissant un appui franc du transducteur sur chaque bouchon 18 de crayon. La double articulation est assurée par une fourchette 106 montée rotative sur un axe 108 porté par la tige et sur laquelle le transducteur tourne autour d'un axe 110 parallèle au premier. Le câble 96 est fixé, par exemple par soudage, à un ergot 112 de la fourchette 106 déporté par rapport à l'axe 108.

Le fonctionnement du dispositif est le suivant. L'assemblage à vérifier est mis en place dans le mécanisme ou suspendu à son outil de manutention permettant de le faire tourner autour de son axe vertical entre les mâchoires 20 de positionnement de la pièce 10 par rapport au dispositif de détection schématisé en Figure 1. Le dispositif en place, le sabre étant rétracté suivant la direction Y, les caractéristiques dimensionnelles de l'assemblage sont mémorisées dans un système de commande du dispositif, puis la sèquence de vérification commence.

Le moteur 30 est commandé de façon à amener le sabre face à une nappe diagonale de crayons à vérifier. Le moteur 30 peut être mis en marche et arrêté automatiquement par un automate, dont le signal d'entrée est fourni par un codeur associè au moteur 30. La position en Z du sabre étant telle que le transducteur 104 et la tige 94 puissent s'engager à coup sûr dans l'espace libre compris entre la pièce d'extrémité 12 et les crayons, le moteur 36 est à son tour actionné pour amener le transducteur au-dessus d'un premier crayon 16 à contrôler. Les pièces sont alors dans la disposition montrée en Figure 4. Le moteur 60 est alors actionné à son tour pour faire descendre le sabre. Si celui-ci s'immobilise du fait de la venue en butée basse de la tige 94 sur un obstacle tel qu'un crayon placé devant celui qui est à vérifier, la pièce de liaison 74 continue à descendre légèrement. Le câble 96 coulisse alors dans sa gaine 98 et permet au transducteur 104 de basculer jusqu'à ce qu'il vienne en contact avec le bouchon 18 du crayon 16 à contrôler. Une fois la pièce 74 immobilisée à son tour, l'embout 76 s'en désolidarise et peut continuer à descendre jusqu'à l'arrêt du moteur 60, commandé par l'automate.

L'exploration ultrasonore est alors faite par un processus qui peut être celui décrit dans le document EP-A-0 115 231 (demande de brevet FR-82 21 243) déjà mentionné.

Le sabre est ensuite remonté, par le moteur 60, jusqu'à un niveau tel qu'il puisse passer librement dans l'espace compris entre les crayons et la pièce d'extrémité 12. Le transducteur est avancé d'un pas suivant la direction Y et la séquence est reprise.

La présence des tirants interdit d'accéder à tous les crayons à partir d'une seule direction diagonale de l'assemblage 10. En conséquence, le sabre sera retiré une fois vérifiée une fraction des crayons. L'assemblage sera déplacé d'au moins une fois 90° en rotation et une autre fraction des crayons sera vérifiée.

On voit que, grâce au montage basculant du transducteur 104, la face active du transducteur s'appliquera toujours bien à plat contre la face terminale du bouchon 18. Au surplus, du fait que le transducteur peut continuer son mouvement de descente en cas de venue en appui de la tige, il est possible de venir contrôler un élément masqué par un autre, tel que l'élément 16a sur la Figure 4.

**Revendications**

1. Procédé de détection par ultrasons des éléments de combustible présentant un défaut d'étanchéité dans un assemblage combustible pour réacteur nucléaire comprenant un faisceau d'éléments combustibles maintenus dans une structure rigide comportant des pièces terminales reliées par des tirants, suivant lequel on envoie dans la gaine de chaque élément, à partir d'une partie terminale de celle-ci, un train d'ondes ultrasonores à une fréquence choisie pour que la propagation s'effectue en ondes de Lamb et on détecte et analyse les échos, caractérisé en ce qu'on introduit, dans l'intervalle compris entre l'une des pièces terminales (12) de l'assemblage irradié (10) non démonté et les éléments de combustible (16), un transducteur (104) à l'aide d'une tige déplaçable transversalement aux éléments, jusqu'à ce que le transducteur soit au-dessus du bouchon (18) d'un élément; on déplace la tige dans le sens longitudinal de l'assemblage pour plaquer le transducteur sur la face terminale du bouchon (18) de l'élément à contrôler avant d'envoyer un train d'ondes ultrasonores et de détecter les échos; on relève le transducteur vers la pièce d'extrémité (12) à l'aide de la tige (94) et on déplace la tige pour répéter les opérations sur de nouveaux éléments.

2. Procédé selon la revendication 1, caractérisé en ce que, le réseau des éléments étant carré, on introduit la tige dans une direction diagonale du réseau des éléments.

3. Procédé selon la revendication 1 ou 2, caractérisé en ce que le procédé est mis en oeuvre en plusieurs étapes successives, l'assemblage (12) étant tourné de 90° autour de son axe longitudinal à l'issue de chaque étape.

4. Dispositif de détection par ultrasons des éléments de combustible présentant un défaut d'étanchéité dans un assemblage combustible pour réacteur nucléaire comprenant un faisceau d'éléments combustibles maintenus dans une structure rigide comportant des pièces terminales (12) reliées par des tirants (14), comprenant un transducteur ultrasonore porté par une tige (94) de dimensions telles qu'elle puisse s'insérer dans l'assemblage entre une pièce terminale (12) et les bouchons des éléments (16) et des moyens de manoeuvre à mouvements croisés permettant d'amener le transducteur (104) au-dessus des différents éléments, dispositif caractérisé en ce qu'il comprend des moyens de déplacement de la tige (94) dans le sens longitudinal des éléments et en ce que le transducteur (104) est monté sur la tige avec au moins un degré de liberté autour d'un axe (108) transversal aux éléments de façon à pouvoir s'appliquer à plat sur la face terminale d'un bouchon.

5. Dispositif selon la revendication 4, caractérisé en ce que le transducteur est relié à la tige (94) par l'intermédiaire d'une fourchette tournant sur la tige (94) autour dudit axe (108) et présentant une liaison de pivotement avec le transducteur autour d'un second axe (110) parallèle au premier.

6. Dispositif selon la revendication 5, caractérisé en ce que ladite fourchette (106) est reliée, par l'intermédiaire d'une liaison flexible (96) à une pièce (74) déplaçable par un moteur (60) de déplacement de la tige suivant la direction en Z, après venue en butée de la tige.

7. Dispositif selon l'une quelconque des revendications 4 à 6, caractérisé en ce que les moyens de déplacement à mouvements croisés comportent, au moins pour la direction d'engagement de la tige dans l'assemblage, un mécanisme manuel de commande de secours.


**Patentansprüche**

1. Verfahren zur Ultraschallerfassung von undichten Brennelementen in einer Brennelementkassette eines Kernreaktors mit einem Bündel von Brennelementen, die in einer steifen Anordnung gehalten werden, die Endstücke aufweist, die untereinander über Züge verbunden sind, wobei ausgehend von einem Endstück der Hülle jeden Elements in diese ein Ultraschallwellenzug eingeführt wird bei einer Frequenz, die so gewählt ist, daß sich die Wellen als Lamb-Wellen fortpflanzen und die Echos erfaßt und analysiert werden,
dadurch gekennzeichnet, daß
in dem Bereich, der zwischen einem der Endstücke (12) der verstrahlten nicht demontierten Brennelementkassette (10) und den Brennelementen (16) liegt, einen Ultraschallwandler (104) mittels einer transversal gegenüber den Elementen verschiebbaren Stange eingeführt wird, bis dieser Ultraschallwandler oberhalb des Verschlusses (18) eines Elements zu liegen kommt, daß die Stange in Längsrichtung bezüglich der Brennelementkassette verschoben wird, um den Ultraschallwandler auf der Endfläche des Verschlusses (18) anzuordnen, bevor ein Ultraschallwellenzug emittiert wird und die Echos erfaßt werden und daß der Ultraschallwandler in Richtung auf das Endstück (12) mit Hilfe der Stange (94) hochgezogen wird und dadurch, daß die Stange verschoben wird, um diese Schritte auf einem neuen Element zu wiederholen.

2. Verfahren nach Anspruch 1, dadurch gekennzeichnet, daß die Elemente gemäß einem rechtwinkligen Netz angeordnet sind und die Stange in einer zur Verteilung der Elemente diagonalen Richtung eingeführt wird.

3. Verfahren nach Anspruch 1 oder 2, dadurch gekennzeichnet, daß das Verfahren in mehreren aufeinanderfolgenden Etappen ausgeführt wird, wobei die Brennelementkassette (12) nach Beendigung jeder Etappe um 90° um ihre Längsachse gedreht wird.

4. Vorrichtung zur Ultraschallerfassung undichter Brennelemente in einer Brennelementkassette für Kernreaktoren mit einem Brennelementbündel, das in einer starren Anordnung gehaltert wird, die Endstücke (12) aufweist, die untereinander über Züge (14) verbunden sind, mit einem von einer Stange (94) getragenen Ultraschallwandler, wobei die Stange solche Ausmaße hat, daß sie in die Brennelementkassette zwischen einem Endstück (12) und den Verschlüssen der Elemente (16) eingeführt werden kann und mit Manövrierorganen, die Reizbewegungen durchführen und es ermöglichen, den Ultraschallwandler (104) oberhalb verschiedener Elemente zu transportieren, gekennzeichnet durch Organe zum Bewegen der Stange (94) in Längsrichtung der Elemente und dadurch, daß der Ultraschallwandler (104) auf der Stange mit mindestens einem Freiheitsgrad um eine transversale Achse (108) der Elemente derart beweglich ist, daß er sich flach auf der Endfläche eines Verschlusses anlegen kann.

5. Vorrichtung nach Anspruch 4, dadurch gekennzeichnet, daß der Ultraschallwandler mit der Stange (94) über eine auf der Stange (94) um die oben genannte Achse (108) drehbare Gabel befestigt ist und ein Schwenkgelenk für Drehungen um eine zweite zur ersten parallelen Achse (110) aufweist.

6. Vorrichtung nach Anspruch 5, dadurch gekennzeichnet, daß die Gabel (106) über eine flexible Verbindung (96) mit einem Teil (74), das mittels eines Motors (60) zur Bewegung der Stange in Z-Richtung bewegbar ist, nachdem es an der Stange eingerastet ist.

7. Vorrichtung nach einem der Ansprüche 4 bis 6, dadurch gekennzeichnet, daß die Kreuzbewegungen ausführenden Organe mindestens bezüglich der Eingriffrichtung der Stange in die Brennelementkassette einen Sicherheits-Handsteuerungsmechanismus aufweist.

## Claims

1. Process for ultrasonic detection of leaking fuel elements in a nuclear reactor fuel assembly comprising a bundle of fuel elements held in a rigid structure including end pieces connected together by tie rods, according to which a train of ultrasonic waves is applied to the sheath of each element from an end portion thereof at a frequency selected for propagation to take place as Lamb waves and the echoes are detected and processed,

characterized in that a transducer (104) is introduced into the gap between one of the end pieces (12) of the non-dismantled irradiated fuel assembly (10) and the fuel elements (16) with a rod which is movable transversally to the elements until the transducer is above the plug (18) of an element; the rod is moved in a direction longitudinal with respect to the assembly for applying the transducer on the end surface of the plug (18) of the element to be inspected before a train of ultrasonic waves is sent and the echoes are detected; the transducer is moved up toward the end piece (12) with the rod (94) and the rod is moved for repeating the steps on new elements.

2. Process according to claim 1, characterized in that, the network of the elements being square, the rod is introduced in a diagonal direction of the element network.

3. Process according to claim 1 or 2, characterized in that the process is carried out in a plurality of successive steps and the assembly (12) is rotated by 90° about its longitudinal axis after each step.

4. Device for ultrasonic detection of leaking fuel elements in a nuclear reactor fuel assembly comprising a bundle of fuel elements held in a rigid structure including end pieces (12) connected together by tie rods (14), comprising an ultrasonic transducer carried by a rod (94) of such size that the rod can be inserted into the assembly between an end piece (12) and the plugs of the elements (16) and cross-motion driving means for bringing the transducer (104) above the different elements,

characterized in that it comprises means for moving the rod (94) in the longitudinal direction of the elements and in that the transducer (104) is carried by the rod with at least one degree of freedom about an axis (108) transversal to the elements for being able to be applied flat against the end face of a plug.

5. Device according to claim 4, characterized in that the transducer is connected to the rod (94) via a fork rotating on the rod (94) about said axis (108) and having a pivotal connection with the transducer about a second axis (110) parallel to the first one.

6. Device according to claim 5, characterized in that said fork (106) is connected, through a flexible connection (96), to a piece (74) movable by a motor (60) for moving the rod along the Z direction after the rod is in abutment.

7. Device according to any one of claims 4-6, characterized in that the cross-motion driving means comprise a manual emergency control mechanism, at least for the direction of engagement of the rod into the assembly.

# FIG.1.

0 186 554

FIG. 2

FIG.4

FIG.3

0 186 554